# EUROPEAN PATENT APPLICATION

(11) **EP 4 474 359 A1**
(43) Date of publication of application: **11.12.2024**
(21) Application number: 23746719.6
(22) Date of filing: 16.01.2023
(51) Int. Cl.: C02F 1/461

(54) **GENERATION DEVICE**

(30) Priority: 31.01.2022 JP 2022013390
(71) Applicant: Act Corporation, Obihiro-shi, Hokkaido, 0800010 (JP)
(72) Inventor: UCHIUMI, Hiroshi, Obihiro-shi, Hokkaido 080-0010 (JP)
(74) Representative: Lewis Silkin LLP
(86) International application number: PCT/JP2023/000955
(87) International publication number: WO 2023/145505

(57) **Abstract**

There is provided a producing device that can easily individually obtain acidic electrolyzed water, alkaline electrolyzed water, and mixed water while saving a space. A producing device (1) includes: an electrolytic bath (5) configured to produce acidic electrolyzed water and alkaline electrolyzed water; adjustment means (10) and (11) configured to adjust discharge and merging of the acidic electrolyzed water and the alkaline electrolyzed water produced in the electrolytic bath (5); one and another flow rate adjustment means (20) and (21) configured to adjust flow rates of the acidic electrolyzed water and the alkaline electrolyzed water merged by the adjustment means (10) and (11); and discharge portions (13), (14), and (17) capable of separately discharging the acidic electrolyzed water, the alkaline electrolyzed water, and the mixed water produced by merging the acidic electrolyzed water and the alkaline electrolyzed water.

## Description

### TECHNICAL FIELD

The present invention relates to a producing device including an electrolytic bath that produces acidic water and alkaline water.

### BACKGROUND ART

Electrolyzed-water producing devices disclosed in, for example, PTLs 1 and 2 described below are conventionally known.

Each of the conventional electrolyzed-water producing devices discharges acidic electrolyzed water and alkaline electrolyzed water produced in an electrolytic bath, through pipes. Further, each of the conventional electrolyzed-water producing devices produces mixed water (neutral water) by merging the produced acidic electrolyzed water and the alkaline electrolyzed water.

### CITATION LIST

### Patent Literature

PTL 1: Japanese Laid-open Patent Publication No. 2019-5679
PTL 2: Japanese Laid-open Patent Publication No. 2021-169084

### SUMMARY OF INVENTION

### Technical Problem

To individually obtain the acidic electrolyzed water, the alkaline electrolyzed water, and the mixed water by any of the above-described electrolyzed-water producing devices, pipes for discharging the acidic electrolyzed water and the alkaline electrolyzed water, and valves, tanks, and the like for merging the acidic electrolyzed water and the alkaline electrolyzed water are separately necessary, and arrangement spaces therefor are necessary. Further, after the producing device is installed, labor for externally attaching the pipes, the valves, the tanks, and the like is required.

The present invention has been made in view of these points, and an object of the present invention is to provide a producing device that can easily individually obtain acidic electrolyzed water, alkaline electrolyzed water, and mixed water while saving a space.

### Solution to Problem

A producing device according to claim 1 includes: an electrolytic bath configured to produce acidic electrolyzed water and alkaline electrolyzed water; one and another adjustment means configured to adjust discharge and merging of the acidic electrolyzed water and the alkaline electrolyzed water produced in the electrolytic bath; one and another flow rate adjustment means configured to adjust flow rates of the acidic electrolyzed water and the alkaline electrolyzed water merged by the adjustment means; one and another excess discharge portions configured to discharge excess acidic electrolyzed water and excess alkaline electrolyzed water generated through flow rate adjustment by the flow rate adjustment means; and discharge portions configured to separately discharge the acidic electrolyzed water, the alkaline electrolyzed water, and mixed water produced by merging the acidic electrolyzed water and the alkaline electrolyzed water.

A producing device according to claim 2 is the producing device according to claim 1 in which the discharge portion configured to discharge the acidic electrolyzed water is connected to the one adjustment means, the discharge portion configured to discharge the alkaline electrolyzed water is connected to the other adjustment means, the discharge portion configured to discharge the mixed water is connected to a flow path between the one flow rate adjustment means and the other flow rate adjustment means, the one excess discharge portion is connected to a flow path between the one adjustment means and the one flow rate adjustment means, and the other excess discharge portion is connected to a flow path between the other adjustment means and the other flow rate adjustment means.

A producing device according to claim 3 is the producing device according to claim 1 or 2 in which a mixing ratio of the acidic electrolyzed water and the alkaline electrolyzed water in the mixed water is optionally settable.

A producing device according to claim 4 is the producing device according to claim 1 or 2 further including: a main body in which the electrolytic bath, the one and other adjustment means, and the one and the other flow rate adjustment means are disposed; sensors disposed at positions corresponding to the respective discharge portions outside the main body, and each configured to detect proximity or contact of an object outside the main body; and a control unit configured to control, in response to detection of any of the sensors, operation of the adjustment means and the flow rate adjustment means to discharge, from the discharge portion corresponding to the sensor, the acidic electrolyzed water, the alkaline electrolyzed water, or the mixed water corresponding to the discharge portion.

### Advantageous Effects of Invention

According to the present invention, it is possible to easily individually obtain the acidic electrolyzed water, the alkaline electrolyzed water, and the mixed water while saving the space.

### BRIEF DESCRIPTION OF DRAWINGS

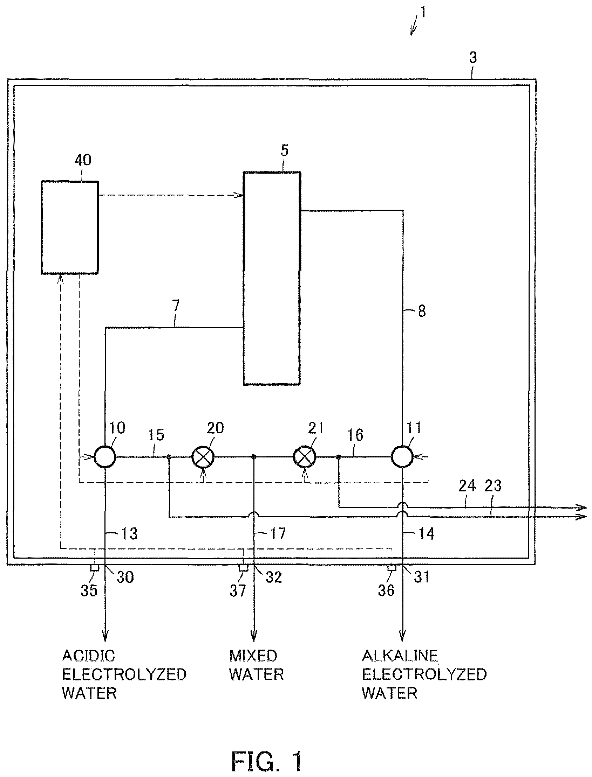

[Fig. 1] Fig. 1 is an explanatory view of a producing device according to an embodiment.

### BRIEF DESCRIPTION OF DRAWINGS

An embodiment of the present invention is described with reference to Fig. 1.

In Fig. 1, a reference number 1 denotes a producing device (electrolyzed-water producing device) producing electrolyzed water. The producing device 1 is a device (hypochlorous water producing device) producing the electrolyzed water through electrolysis of, for example, salt water as electrolysis solution.

The producing device 1 includes a main body 3. An electrolytic bath (electrolytic cell) 5 is disposed in the main body 3. The electrolytic bath 5 includes a chamber, and electrodes (cathode and anode) and an ion exchange membrane disposed inside the chamber, and electrolyzes electrolysis solution inside thereof to produce acidic electrolyzed water and alkaline electrolyzed water. In the present embodiment, the electrolytic bath 5 is of a continuous type for continuously producing the electrolyzed water by using water (e.g., tap water having passed through water softener) as electrolytic raw water and electrolysis solution continuously supplied from outside of the main body 3. A water supply unit such as a pump drawing the water and the electrolysis solution from a water supply source and an electrolysis solution supply source outside the main body 3, to the electrolytic bath 5 may be provided outside or inside the main body 3. A power supply unit is connected to the respective electrodes. The power supply unit applies a negative voltage to the cathode, and supply a positive voltage to the anode.

The electrolyzed water produced in the electrolytic bath 5 is discharged from the electrolytic bath 5 through pipe portions 7 and 8. The pipe portions 7 and 8 are disposed in the main body 3. One pipe portion 7 is connected to an anode chamber, and discharges the acidic electrolyzed water from the electrolytic bath 5. The other pipe portion 8 is connected to a cathode chamber, and discharges the alkaline electrolyzed water from the electrolytic bath 5.

Adjustment means 10 and 11 are respectively connected to the pipe portions 7 and 8. The adjustment means 10 and 11 are disposed in the main body 3. The adjustment means 10 and 11 adjust discharge and merging of the acidic electrolyzed water and the alkaline electrolyzed water produced in the electrolytic bath 5. In the adjustment means 10 and 11, a ratio of the acidic electrolyzed water and the alkaline electrolyzed water in discharge and in merging may be optionally set; however, in the present embodiment, the adjustment means 10 and 11 are switching means (switching valves) in which discharge or merging of the acidic electrolyzed water and the alkaline electrolyzed water is selectively set. In other words, the adjustment means 10 is connected to a discharge portion 13 discharging the corresponding electrolyzed water from the main body 3 to the outside and a merging portion 15 merging the electrolyzed water, and is switched to selectively feed the electrolyzed water having passed through the pipe portion 7 to any of the discharge portion 13 and the merging portion 15. The adjustment means 11 is connected to a discharge portion 14 discharging the corresponding electrolyzed water from the main body 3 to the outside and a merging portion 16 merging the electrolyzed water, and is switched to selectively feed the electrolyzed water having passed through the pipe portion 8 to any of the discharge portion 14 and the merging portion 16. The discharge portion 13 is an acidic electrolyzed water discharge portion, and the discharge portion 14 is an alkaline electrolyzed water discharge portion. The merging portions 15 and 16 are connected to each other, and are connected, at a connection position therebetween, to a discharge portion 17 that discharges mixed water produced by merging the electrolyzed water, from the main body 3 to the outside. The discharge portion 17 is a mixed water discharge portion. Therefore, in the present embodiment, the electrolyzed water is selectively fed to the discharge portions 13, 14, or 17 by the adjustment means 10 and 11.

Flow rate adjustment means (flow rate adjustment valves) 20 and 21 adjust flow rates (flow rates per unit time) of the electrolyzed water merged by the adjustment means 10 and 11 are preferably disposed in the merging portions 15 and 16, respectively. The flow rate adjustment means 20 and 21 are disposed in the main body 3. The flow rates of the electrolyzed water merged by the flow rate adjustment means 20 and 21, namely, a mixing ratio of the acidic electrolyzed water and the alkaline electrolyzed water may be fixed to predetermined amounts (predetermined ratio), or may be optionally settable by a user or the like.

Further, an excess discharge portion 23 discharging excess electrolyzed water to the outside of the main body 3 is preferably connected between the adjustment means 10 and the flow rate adjustment means 20 in the merging portion 15, and an excess discharge portion 24 discharging excess electrolyzed water to the outside of the main body 3 is preferably connected between the adjustment means 11 and the flow rate adjustment means 21 in the merging portion 16. The excess discharge portions 23 and 24 are overflow discharge pipes overflowing the electrolyzed water prevented from flowing to the discharge portion 17 by the flow rate adjustment means 20 and 21.

Drain outlets 30, 31, and 32 at downstream ends of the discharge portions 13, 14, and 17 are disposed on an outer surface of the main body 3, and are exposed to the outside. Valve bodies such as faucets may be disposed in the drain outlets 30, 31, and 32. Sensors 35, 36, and 37 are respectively disposed near the drain outlets 30, 31, and 32. In other words, the sensors 35, 36, and 37 respectively corresponding to the discharge portions 13, 14, and 17 are provided. The sensors 35, 36, and 37 each detect an object (supply receiving portion) such as a hand of the user and a container. The sensors 35, 36, and 37 each may be of a non-contact type or a contact type.

The sensors 35, 36, and 37 are electrically connected to a control unit 40. The control unit 40 generates signals for controlling operation of at least the adjustment means 10 and 11 with detection of the sensor 35, 36, or 37 as a trigger, and operates the adjustment means 10 and 11 so as to supply water from the drain outlet 30, 31, or 32 positioned near the sensor 35, 36, or 37 having detected the supply receiving portion. In the present embodiment, the control unit 40 generates signals for controlling operation of the water supply unit of the electrolytic bath 5, the power supply unit, the adjustment means 10 and 11, and the flow rate adjustment means 20 and 21, and operates these units so as to supply water from the drain outlet 30, 31, or 32 positioned near the sensor 35, 36, or 37 having detected the supply receiving portion. The control unit 40 is disposed in the main body 3.

Next, operation of the producing device 1 according to the embodiment is described.

When the electrolytic raw water and the electrolysis solution are supplied from the water supply unit to the electrolytic bath 5, the producing device 1 electrolyzes the electrolysis solution by supplying power from the power supply unit to the electrodes.

More specifically, in the electrolytic bath 5, in the chamber in which the cathode is disposed, water is decomposed, and alkaline electrolyzed water, for example, caustic soda water is obtained as follows.

H₂O + 2e- → 1/2H₂ + OH-

Na⁺ + e⁻ → Na

Na + OH⁻ → NaOH + e⁻

In the chamber in which the anode is disposed, chlorine ions are reduced to generate chlorine gas, and the chlorine gas reacts with water to produce acidic electrolyzed water, for example, hypochlorous water (electrolyzed sterilization water).

H₂O → 2H⁺ + 1/2O₂ + 2e⁻

2Cl⁻ → Cl₂ + 2e⁻

Cl₂ + H₂O ⇔ HClO + HCl

The acidic electrolyzed water and the alkaline electrolyzed water produced in the electrolytic bath 5 are discharged from the discharge portions 13 and 14 to the outside of the main body 3 through the pipe portions 7 and 8 and the adjustment means 10 and 11. Further, the mixed water obtained by mixing the acidic electrolyzed water and the alkaline electrolyzed water is discharged from the discharge portion 17 to the outside of the main body 3. In the present embodiment, the mixed water is, for example, hypochlorous water (neutral water) controlled in pH to near neutral.

In the present embodiment, when the supply receiving portion is detected by any of the sensors 35, 36, and 37, the control unit 40 generates the signals based on the detection. Based on the generated signals, the water supply unit, the adjustment means 10 and 11, and the flow rate adjustment means 20 and 21 operate, the electrolysis raw water and the electrolysis solution are supplied from the water supply unit to the electrolytic bath 5, and the electrolysis solution is electrolyzed. The adjustment means 10 and 11 and the flow rate adjustment means 21 operate so as to discharge the electrolyzed water produced through electrolysis from the drain outlet 30, 31, or 32 corresponding to the sensor 35, 36, or 37 having detected the supply receiving portion.

For example, in a case where the acidic electrolyzed water is supplied, when the user holds up the supply receiving portion to a vicinity of the drain outlet 30, the sensor 35 detects the supply receiving portion, and the control unit 40 generates signals in response to the detection. In response to the signals, the water supply unit operates to supply the electrolysis raw water and the electrolysis solution to the electrolytic bath 5, and the power supply unit operates to supply power to the electrodes in the electrolytic bath 5. In the electrolytic bath 5, the acidic electrolyzed water and the alkaline electrolyzed water are produced through electrolysis as described above, and the acidic electrolyzed water and the alkaline electrolyzed water are discharged from the electrolytic bath 5 through the pipe portions 7 and 8. The acidic electrolyzed water is supplied from the drain outlet 30 to the supply receiving portion, by operation of the adjustment means 10 for causing the acidic electrolyzed water to flow to the discharge portion 13 in response to the signals generated by the control unit 40. In contrast, the alkaline electrolyzed water is discharged from the excess discharge portion 24, by operation of the adjustment means 11 for causing the alkaline electrolyzed water to flow to the merging portion 16 and closing operation of the flow rate adjustment means 21 in response to the signals generated by the control unit 40.

Likewise, in a case where the alkaline electrolyzed water is suppled, when the user holds up the supply receiving portion to a vicinity of the drain outlet 31, the sensor 36 detects the supply receiving portion, and the control unit 40 generates signals in response to the detection. In response to the signals, the water supply unit operates to supply the electrolysis raw water and the electrolysis solution to the electrolytic bath 5, and the power supply unit operates to supply power to the electrodes in the electrolytic bath 5. In the electrolytic bath 5, the acidic electrolyzed water and the alkaline electrolyzed water are produced through electrolysis as described above, and the acidic electrolyzed water and the alkaline electrolyzed water are discharged from the electrolytic bath 5 through the pipe portions 7 and 8. The alkaline electrolyzed water is supplied from the drain outlet 31 to the supply receiving portion, by operation of the adjustment means 11 for causing the alkaline electrolyzed water to flow to the discharge portion 14 in response to the signals generated by the control unit 40. In contrast, the acidic electrolyzed water is discharged from the excess discharge portion 23, by operation of the adjustment means 10 for causing the acidic electrolyzed water to flow to the merging portion 15 and closing operation of the flow rate adjustment means 20 in response to the signals generated by the control unit 40.

In a case where the mixed water is supplied, when the user holds up the supply receiving portion to a vicinity of the drain outlet 32, the sensor 37 detects the supply receiving portion, and the control unit 40 generates signals in response to the detection. In response to the signals, the water supply unit operates to supply the electrolysis raw water and the electrolysis solution to the electrolytic bath 5, and the power supply unit operates to supply power to the electrodes in the electrolytic bath 5. In the electrolytic bath 5, the acidic electrolyzed water and the alkaline electrolyzed water are produced through electrolysis as described above, and the acidic electrolyzed water and the alkaline electrolyzed water are discharged from the electrolytic bath 5 through the pipe portions 7 and 8. In response to the signals generated by the control unit 40, the adjustment means 10 and 11 operate to cause the acidic electrolyzed water and the alkaline electrolyzed water to flow to the merging portions 15 and 16, respectively, and the flow rate adjustment means 20 and 21 operate to be put into predetermined open states . As a result, the acidic electrolyzed water and the alkaline electrolyzed water are each adjusted in flow rate and are mixed, and the mixed water flows to the discharge portion 17. The mixed water is then supplied from the drain outlet 32 to the supply receiving portion. The excess acidic electrolyzed water and the excess alkaline electrolyzed water generated through the flow rate adjustment by the flow rate adjustment means 20 and 21 are discharged from the excess discharge portions 23 and 24.

For example, after a predetermined time has elapsed after the supply receiving portion is not detected by the sensors 35, 36, and 37, or after predetermined operation such as operation of a stop button is performed, the control unit 40 generates signals for stopping the water supply unit of the electrolytic bath 5, the power supply unit, the adjustment means 10 and 11, and the flow rate adjustment means 20 and 21, to stop supply of the acidic electrolyzed water, the alkaline electrolyzed water, or the mixed water, thereby stopping these units.

As described above, according to the above-described embodiment, the electrolytic bath 5 and the adjustment means 10 and 11 switching discharge and merging of the acidic electrolyzed water and the alkaline electrolyzed water produced in the electrolytic bath 5 are disposed in the main body 3, and the acidic electrolyzed water, the alkaline electrolyzed water, and the mixed water produced by merging the acidic electrolyzed water and the alkaline electrolyzed water can be discharged from the main body 3 through the respective discharge portions 13, 14, and 17. This eliminates necessity for separately providing an external tank storing the electrolyzed water for obtaining the mixed water, valves, pipes, and the like for merging the electrolyzed water on the outside of the main body 3. Only installing the producing device 1 makes it possible to easily individually obtain the acidic electrolyzed water, the alkaline electrolyzed water, and the mixed water from the discharge portions 13, 14, and 17 while saving the space. In other words, the producing device 1 that can individually obtain the acidic electrolyzed water, the alkaline electrolyzed water, and the mixed water can be compactly realized.

Further, the flow rates of the electrolyzed water merged by the adjustment means 10 and 11 are adjusted by the flow rate adjustment means 20 and 21 disposed in the main body 3, which makes it possible to produce the mixed water having desired pH based on the flow rates of the electrolyzed water to be merged.

The excess acidic electrolyzed water and the excess alkaline electrolyzed water generated through the flow rate adjustment by the flow rate adjustment means 20 and 21 are discharged by the excess discharge portions 23 and 24, which makes it possible to use the acidic electrolyzed water and the alkaline electrolyzed water not directly used from the discharging portions 13, 14, and 17, for other applications.

The control unit 40 controls operation of the adjustment means 10 and 11 to discharge the water from at least any of the discharge portions 13, 14, and 17, which makes it possible to easily obtain desired water among the acidic electrolyzed water, the alkaline electrolyzed water, and the mixed water.

The sensors 35, 36, and 37 are disposed respectively corresponding to the discharge portions 13, 14, and 17, and the control unit 40 controls the operation of the electrolytic bath 5 and the adjustment means 10 so as to discharge the water from the discharge portions 13, 14, and 17 corresponding to the sensors 35, 36, and 37 in response to detection by the sensors 35, 36, and 37. As a result, the desired water among the acidic electrolyzed water, the alkaline electrolyzed water, and the mixed water can be easily obtained by holding up the supply receiving portion such as a hand to the sensor 35, 36, or 37.

Note that, in the above-described embodiment, the flow rate adjustment means 20 and 21, the excess discharge portions 23 and 24, and the sensors 35, 36, and 37 are not essential components.

Further, the control unit 40 is not limited to a control unit that controls the operation of the adjustment means 10 and 11 so as to discharge the water from any of the discharge portions 13, 14, and 17 in response to detection of the object (supply receiving portion) by the sensor 35, 36, or 37, and may control the operation of the adjustment means 10 and 11 so as to discharge the water from any of the discharge portions 13, 14, and 17 in response to reception of a signal input from outside, for example, a signal input from operation means such as a button and a remote control, or a signal input by sound or the like.

Further, in a case where the ratio of the acidic electrolyzed water and the alkaline electrolyzed water in discharge and in merging is optionally set in the adjustment means 10 and 11, the control unit 40 can perform control so as to simultaneously discharge two or more of the acidic electrolyzed water, the alkaline electrolyzed water, and the mixed water from the discharge portions 13, 14, and 17.

### Reference Signs List

1 Producing device
3 Main body
5 Electrolytic bath
10, 11 Adjustment means
13, 14, 17 Discharge portion
20, 21 Flow rate adjustment means
23, 24 Excess discharge portion
35, 36, 37 Sensor
40 Control unit

## Claims

1. A producing device, comprising:
an electrolytic bath configured to produce acidic electrolyzed water and alkaline electrolyzed water;
one and another adjustment means configured to adjust discharge and merging of the acidic electrolyzed water and the alkaline electrolyzed water produced in the electrolytic bath;
one and another flow rate adjustment means configured to adjust flow rates of the acidic electrolyzed water and the alkaline electrolyzed water merged by the adjustment means;
one and another excess discharge portions configured to discharge excess acidic electrolyzed water and excess alkaline electrolyzed water generated through flow rate adjustment by the flow rate adjustment means; and
discharge portions configured to separately discharge the acidic electrolyzed water, the alkaline electrolyzed water, and mixed water produced by merging the acidic electrolyzed water and the alkaline electrolyzed water.

2. The producing device according to claim 1, wherein
the discharge portion configured to discharge the acidic electrolyzed water is connected to the one adjustment means,
the discharge portion configured to discharge the alkaline electrolyzed water is connected to the other adjustment means,
the discharge portion configured to discharge the mixed water is connected to a flow path between the one flow rate adjustment means and the other flow rate adjustment means,
the one excess discharge portion is connected to a flow path between the one adjustment means and the one flow rate adjustment means, and
the other excess discharge portion is connected to a flow path between the other adjustment means and the other flow rate adjustment means.

3. The producing device according to claim 1 or 2, wherein a mixing ratio of the acidic electrolyzed water and the alkaline electrolyzed water in the mixed water is optionally settable.

4. The producing device according to claim 1 or 2, further comprising:
a main body in which the electrolytic bath, the one and other adjustment means, and the one and other flow rate adjustment means are disposed;
sensors disposed at positions corresponding to the respective discharge portions outside the main body, and each configured to detect proximity or contact of an object outside the main body; and
a control unit configured to control, in response to detection of any of the sensors, operation of the adjustment means and the flow rate adjustment means to discharge, from the discharge portion corresponding to the sensor, the acidic electrolyzed water, the alkaline electrolyzed water, or the mixed water corresponding to the discharge portion.
